# EUROPEAN PATENT SPECIFICATION

(11) **EP 1 329 393 B1**
(45) Date of publication and mention of the grant of the patent: **13.09.2006**
(21) Application number: 02258167.2
(22) Date of filing: 27.11.2002
(51) Int. Cl.: B65D 41/04, B29C 70/80

(54) **Plastic closure, container equipped with it and method of manufacture**
Kunststoffverschluss, mit diesem ausgerüsteter Behälter, und Herstellungsverfahren
Capuchon en matière plastique, récipient équipé de ce capuchon, et méthode pour sa fabrication

(30) Priority: 27.11.2001 US 994554
(43) Date of publication of application: 23.07.2003
(73) Proprietor: OWENS-ILLINOIS CLOSURE INC.,, Toledo Ohio 43666 (US)
(72) Inventor: Bloom, Kenneth S., Bloomdale, OH 44817 (US); Eilertson, Stephen A., Perrysburg, OH 43551 (US)
(74) Representative: Mercer, Christopher Paul

(56) References cited:
- EP-A- 0 915 028
- EP-A- 0 926 078
- EP-A- 0 987 187
- US-A- 5 839 592

## Description

The present invention is directed to plastic closures for beverage, food, juice, pharmaceutical and like applications, and more particularly to a closure and method of manufacture that are particularly well suited for high-temperature (e.g., pasteurization, hot fill, asceptic fill and retort) applications.

### Background and Objects of the Invention

It has heretofore been proposed to provide a plastic closure for a container, which comprises a plastic cap or shell with an interior liner for sealing engagement with the sealing surface of the container finish. For example, U.S. Patent 4,984,703 discloses a plastic closure that comprises a shell having a base wall with a peripheral skirt and a thread for securing the closure to a container finish, and a sealing liner compression molded in situ on the interior of the shell base wall. U.S. Patent 5,451,360 discloses a method and apparatus for compression molding the liner in situ within the closure shell. It has also been proposed to provide plastic resin barrier materials within the sealing liner for resisting transmission of gases (e.g., carbon dioxide and oxygen), water vapor and/or flavorants through the liner. For example, EP 0926078A1 discloses a plastic closure and method of manufacture in which the liner is compression molded in situ on the interior surface of the closure base wall, and includes a multiplicity of alternating layers of matrix polymer such as EVA and barrier polymer such as EVOH, EP 0926215A1 discloses a plastic closure and method of manufacture in which the liner is compression molded in situ on the interior surface of the closure base wall, and includes a dispersion of barrier polymer platelets, such as EVOH, dispersed within matrix polymer such as EVA.

EP 0 915 028 discloses a closure having a shell and an inserted sealing disk.

Although the closures, the methods of manufacture, and the closure and container packages disclosed in the noted documents have addressed problems theretofore extent in the art, further improvements remain desirable. For example, it is desirable to provide a closure and liner construction, a method of closure manufacture, and a closure and container package that are particularly well adapted for high-temperature applications. Such high-temperature applications include, for example, applications in which the container is filled with product while the product is hot, such as so-called hot fill and asceptic fill applications, High-temperature applications also include applications in which the filled package is subjected to pasteurization or retort after filling. During retort applications, for example, the filled package may be subjected to a temperature of 130°C (265° F). for fifteen minutes. High-temperatures situations can also occur when a package is filled with a carbonated beverage and subjected to storage under high-temperature conditions, in which the internal pressure within the container can increase dramatically. In all of such high-temperature situations, the container closure is subjected to elevated internal pressure, which tends to distort or dome the closure base wall and lift the sealing liner away from sealing engagement with the container finish. It is an objective of the present invention to provide a closure, preferably a barrier closure, a method of closure manufacture, and a closure and container package that are particularly well suited for such high-temperature applications, and specifically in which the sealing liner of the closure remains in sealing engagement with the container finish during high-temperature situations.

### Summary of the Invention

A two-piece plastic closure in accordance with a first aspect of the present invention comprises a plastic closure shell that includes a base wall and a peripheral skirt with an internal thread or bead for securing the closure to a container finish, characterised by a plastic disk loosely retained within the closure shell parallel to but separate from the base wall, and a resilient sealing liner secured to the disk for sealing engagement with a container finish. The plastic disk preferably includes an annular ring underlying the liner on a side of the disk remote from the base wall. The ring is spaced from the closure skirt for urging the liner against the radially inner edge around the mouth of a container finish when the closure is secured to the container finish. Thus, even if the closure base wall is distorted or domed outwardly during a high-temperature situation, the annular ring maintains the liner in sealing engagement with the radially inner edge of the container finish.

The disk in the preferred embodiments of this first aspect of the invention preferably includes a flat circular base from which the annular ring extends coaxially with the circular disk periphery. The ring preferably has an S-shaped radially outwardly facing surface, including a rounded convex portion that extends from an axial edge of the ring and a rounded concave portion that extends from the convex portion to a flat axially facing surface on the base of the disk. The liner is urged against the axially facing sealing surface of the container finish and against the radially inner edge of the container finish by this S-shaped ring surface. The base of the disk has a central portion within the ring and a peripheral portion outside of the ring. The liner is preferably of uniform thickness over the central portion of the disk, over the ring and over the peripheral portion of the disk. The disk preferably includes an axially extending bead around a peripheral portion of the disk base to space the disk base from the base wall of the liner. The closure preferably includes a bead extending radially inwardly from the closure skirt adjacent to but spaced from the base wall, and the periphery of the disk is preferably loosely captured between the skirt bead and the base wall.

In some preferred embodiments in accordance with this first aspect of the invention, the disk further includes an annular rib around a radially outer edge of the disk base extending axially away from the base wall of the closure shell and underlying the liner for engaging the liner against a radially outer edge of the container finish. Thus, in this embodiment, even if the liner becomes separated from the container finish around the radially inner edge of the finish, sealing engagement is maintained between the liner and the container finish around the radially outer edge of the finish. The closure shell preferably has a bead extending radially inwardly from the skirt adjacent to but spaced from the base wall of the closure shell, and the annular rib on the disk preferably has a concave radially outwardly directed surface portion received over the skirt bead for holding the disk and liner in position within the closure.

In accordance with yet another aspect of the present invention, a method of making a plastic closure includes providing a plastic closure shell having a base wall and a peripheral skirt with an internal thread or bead for securing the closure to a container finish. A plastic disk is placed within the closure shell against the base wall, and a resilient plastic liner is compression molded in situ onto the disk for sealing engagement with a container finish.

A closure and container package in accordance with a further aspect of the present invention includes a plastic container having a body and a finish with an external thread, and a plastic closure that includes a shell with a base wall and a peripheral skirt with an internal thread securing the closure to the container finish. A plastic disk is retained within the closure shell.

### Brief Description of the Drawings

The invention, together with additional objects, features and advantages thereof, will be best understood from the following description, the appended claims and the accompanying drawings in which:
FIG. I is a partially sectioned elevational view of a closure and container package in accordance with one presently preferred embodiment of the invention;
FIG. 2 is a fragmentary sectional view of the portion of the package within the circle 2 in FIG. 1;
FIG. 3 is a fragmentary exploded perspective view of the container finish and closure in the embodiment of FIG. 1;
FIG. 4 is a top plan view of the plastic disk in the closure of FIGS. 1 - 3;
FIG. 5 is a sectional view taken substantially along the line 5 - 5 in FIG. 4;
FIG. 6 is an enlarged fragmentary sectional view of the portion of the disk within the circle 6 in FIG. 5;
FIG. 7 is a fragmentary partially sectioned elevational view of a closure and container package in accordance with a modified embodiment of the invention;
FIG. 8 is a fragmentary sectional view on an enlarged scale of the portion of the package within the circle 8 in FIG. 7;
FIG. 9 is a fragmentary exploded perspective view of the container finish and closure in the package of FIGS. 7 - 8; and
FIG. 10 is a fragmentary sectional view similar to that of FIG. 6 but illustrating a portion of the closure disk in the package of FIGS. 7 - 9.

### Detailed Description of Preferred Embodiments

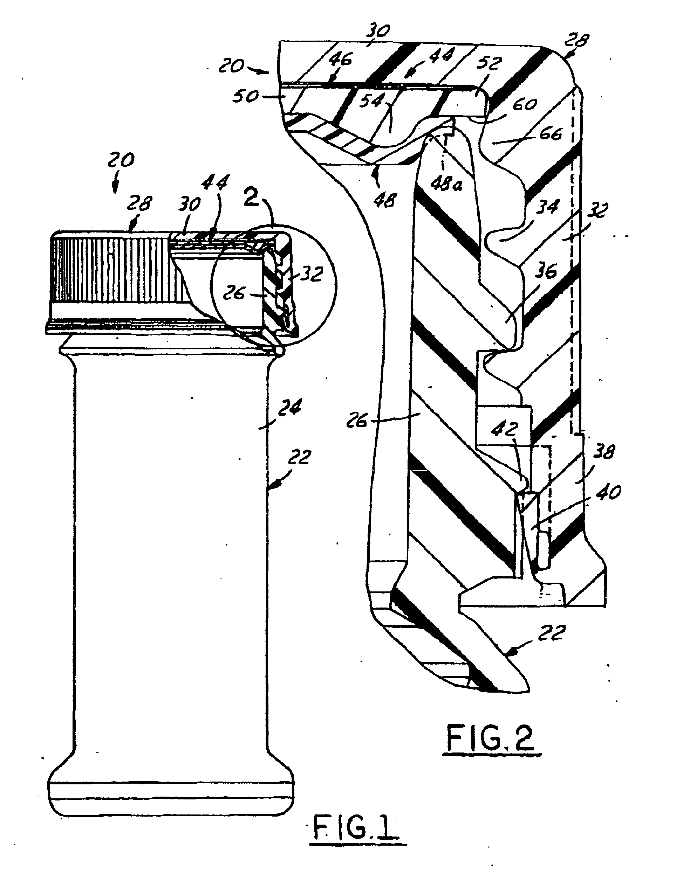

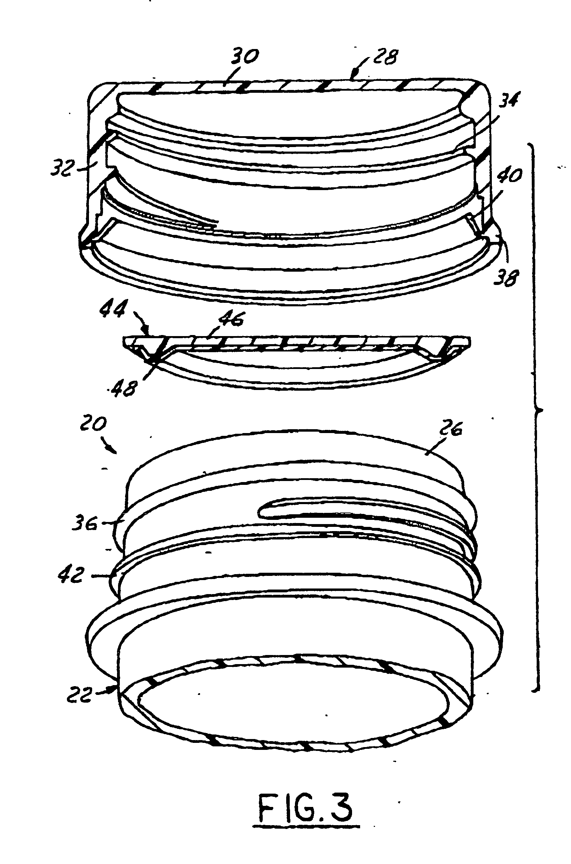

FIGS. 1 - 3 illustrate a closure and container package 20 in accordance with one presently preferred embodiment of the invention as comprising a container 22 having a body 24 from which a cylindrical finish 26 integrally extends. A closure 28 includes a base wall 30 and a cylindrical peripheral skirt 32 having one or more internal threads 34 received over one or more external threads 36 on container finish 26. Closure 28 preferably, but not necessarily, additionally includes a tamper - indicating band 38 connected by frangible bridges or a frangible web to the lower edge of skirt 32. (Directional words such as "lower" are employed by way of description and not limitation with respect to the upright orientation of the packages illustrated in the drawings, and directional words such as "axially" and "radially" are taken with respect to the axis of the container finish or closure skirt, as applicable. All dimensions are provided by way of example and not limitation.) A stop flange 40 extends from tamper-indicating band 38 into engagement with a bead 42 on container finish 26 so that, when closure 28 is removed from container 22, band 38 is separated from the closure skirt by rupture of the frangible ribs or web. Other types of tamper indicating means may be employed. To the extent thus far described, closure 28 and package 20 are of generally conventional construction. The closure is preferably of molded plastic construction. The container may be of glass or plastic construction.

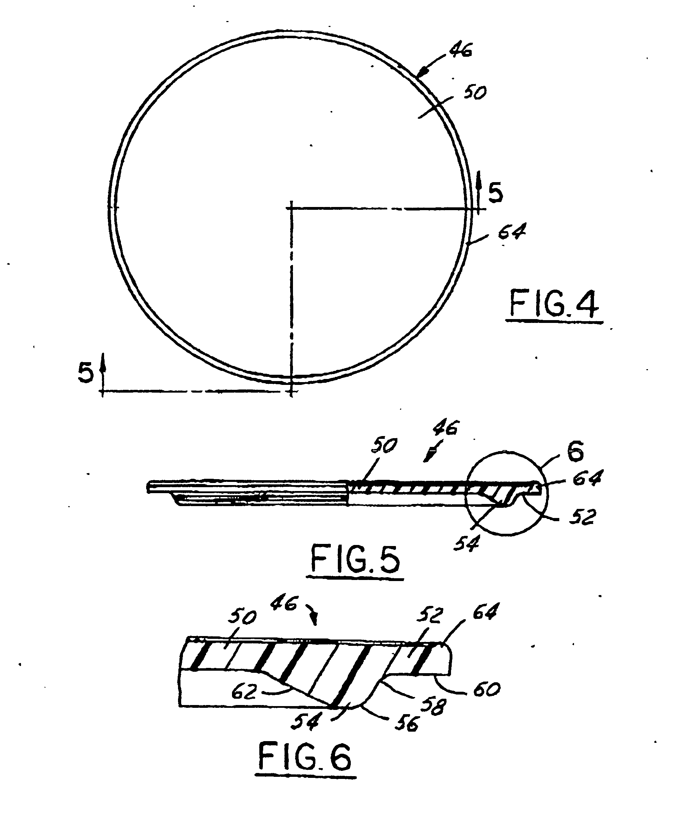

In accordance with one aspect of the present invention, a liner disk subassembly 44 is loosely captured within closure 28 adjacent to base wall 30. Liner disk subassembly 44 includes a plastic circular disk 46 onto the undersurface of which a flexible resilient sealing liner 48 is secured. In the embodiment of FIGS. 1 - 3, liner 48 does not extend to the peripheral edge of disk 46. Referring to FIGS. 4 - 6, disk 46 includes a generally flat circular base having a central portion 50 and a peripheral edge 52. The disk base, including central portion 50 and peripheral edge portion 52, is of generally uniform thickness in the axial direction, and peripheral edge of the disk extends at constant radius entirely around the axis of the disk. A circumferentially continuous annular ring 54 extends axially downwardly from the disk base coaxially with the disk base. Ring 54 is adjacent to but spaced radially inwardly from the peripheral edge of disk 46, effectively separating central portion 50 from peripheral portion 52. As best seen in FIG. 6, ring 54 has a generally S-shaped radially outwardly facing surface formed by a convex portion 56 that extends from the rounded axial edge of ring 54, and a concave portion 58 that extends from convex portion 56 to the flat axially facing surface 60 of disk peripheral portion 52. The radially inwardly facing surface 62 of ring 54 is conical. A bead 64 extends axially upwardly from peripheral portion 52 around the peripheral edge of the disk for engagement with the opposing undersurface of closure base wall 30 (FIG. 2) to position the body of the disk parallel to but spaced from the opposing surface of the closure base wall. Bead 64 may be circumferentially continuous or segmented, In one presently preferred but exemplary embodiment of the invention for a 40mm retortable closure, disk 46 has a nominal outside diameter of 37,516 mm (1.477 inches), and ring 54 has a nominal radial thickness of 3,759 mm (0.148 inch). Surfaces 58, 56 both have a nominal radius of curvature of 0,762 mm (0.030 inch), and the portion of ring 54 where surface 56 blends into surface 58 has a nominal angle of 120° with respect to the plane of the disk base. Surface 62 has a nominal angle of 27° with respect to the disk plane. Bead 64 has a nominal axial height of 0,076 mm (0.003 inch). Disk base 50 has a nominal thickness of 0,914 mm (0.036 inch), and the overall height of the disk base plus ring 54 has a nominal dimension of 2,134 (0.084 inch). Peripheral portion 52 has a nominal radial dimension of 2,057 mm (0.081 inch).

Returning to FIGS. 1 - 3, a rounded bead 66 extends radially inwardly from closure skirt 32 adjacent to but spaced from the undersurface of closure base wall 30. Bead 66 may be circumferentially continuous or segmented, The peripheral portion 52 of disk 46 is loosely captured between bead 66 and base wall 30. (Liner disk subassembly 44 is loosely captured within the closure shell until the closure is secured to the container finish, at which point the liner disk is tightly clamped between the closure base wall and the container finish.) Liner 48 is preferably compression molded in situ onto disk 46 while the disk is captured within the closure. That is, disk 46 is first placed within the closure shell and captured between bead 66 and base wall 30, and liner 48 is then compression molded in situ onto the disk. Alternatively, but less preferably, the liner may be compression molded onto the disk, and the liner disk subassembly then assembled to the closure. Liner 48 may be of any suitable material construction. In accordance with the preferred embodiments of the invention, liner 48 is of resin construction, and most preferably includes a barrier material to resist permeation of gases, water vapor and flavorants through the liner. The liner is most preferably provided in accordance with the disclosure of one of the first two European publications noted above. Other suitable barrier liners or non-barrier liners may alternatively be provided. It will be noted in FIGS. 1 and 2 that liner 48 extends over the entire undersurface of disk 46 that is exposed in assembly to the interior of container 22. The liner extends over ring 54 and surfaces 56, 58, and onto flat surface 60 for at least a distance sufficient to engage the axial end of container finish 26 when closure 28 is secured to container 22. Ring 54 additionally urges the liner into sealing engagement with the radially inner edge of the container finish mouth, so that the liner normally is in sealing engagement with both the axial end and the radially inner edge of the container finish. In FIG. 2, the phantom line 48a shows compression of the peripheral portion of the liner in sealing engagement with the container finish. Liner 48 is preferably of uniform thickness over the central portion of disk 46, over ring 54 and onto surface 60. By way of example, liner 48 may have a nominal thickness of 0,635 mm (0.025 inch). In a tamper-indicating closure, the axial spacing between bead 66 and base wall 30 preferably is such that flange 40 of band 38 abuts bead 42 on finish 26, and fractures the frangible bridges or web, before bead 66 lifts liner disk subassembly 44 out of sealing engagement with the container finish. In this way, the closure will indicate tampering before the seal is broken.

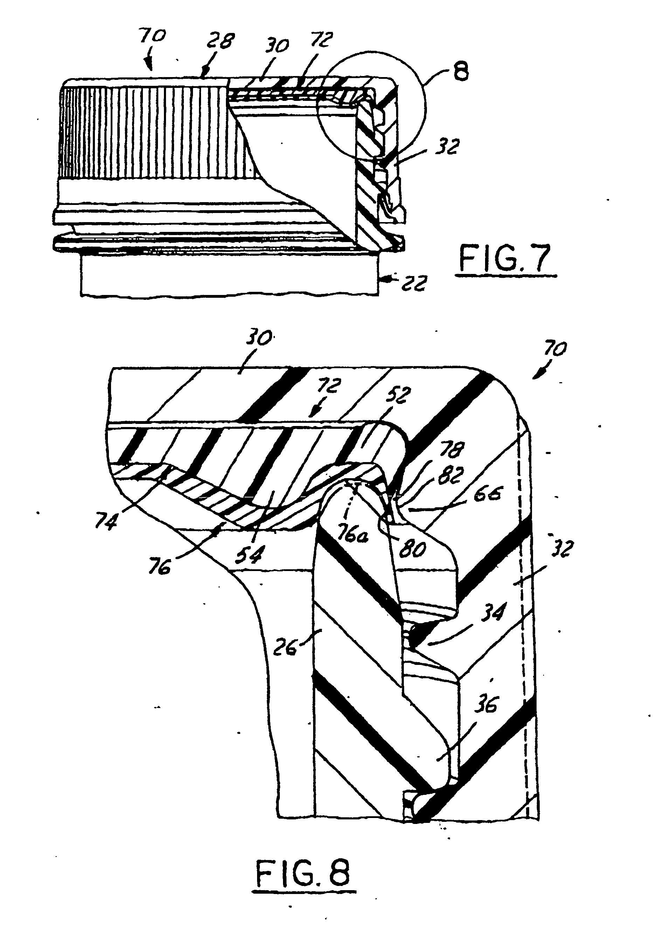

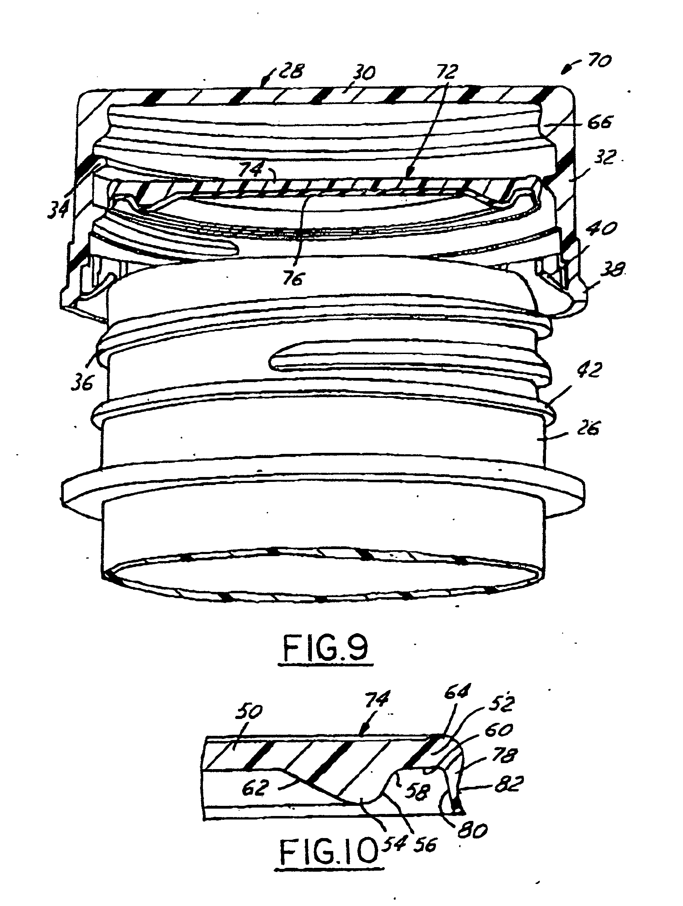

FIGS. 8 - 10 illustrate a closure and container package 70 in accordance with a modified embodiment of the invention. (In all embodiments, identical reference numerals are employed to indicate identical or functionally related elements.) In package 70, the liner disk subassembly 72 comprises a circular disk 74 and a flexible resilient liner 76 molded thereon. Disk 74 includes a central base portion 50 and a peripheral portion 52, from which a circumferentially continuous annular rib 78 integrally extends. Rib 78 is disposed at the outer peripheral edge of peripheral disk portion 52, and extends axially therefrom coaxially with the disk base. The inner surface 80 of rib 78 is conical, extending axially and radially outwardly from flat surface 60 of disk 74. The radially outer surface of rib 78 has a concave recess or depression 82 that is received by snap fit in assembly over bead 66 on closure skirt 32. In a presently preferred embodiment of disk 74 for a 40mm retortable closure, rib 78 has a nominal axial dimension of 1,524 mm (0.060 inch), surface 82 has a nominal radius of 0,889 mm (0.035 inch), and bead 64 has a nominal axial dimension of 0,152 (0.006 inch). All other dimensions are the same as those provided in connection with disk 46 in FIGS. 4 - 6. Liner 76 is molded over the entire undersurface of disk 74, including inside surface 80 of rib 78. As best seen in FIG. 8 with reference to phantom line 76a that shows the initial uncompressed geometry of the liner, the liner has a uniform thickness along the central portion of the disk, along ring 54 and along peripheral portion 52, but tapers in thickness axially along surface 80 of rib 78. Surfaces 56, 58, 60 and 80 of disk 74 urge liner 76 into sealing engagement with the radially inner edge, the axial end, and the radially outer edge of the container finish. Thus, even if pressure within the container is sufficient to distort or dome closure base wall 30 and disk 74 sufficiently for loss of sealing engagement at the radially inner edge of the container finish, sealing engagement is maintained along the radially outer edge of the container finish by disk rib 78 and the portion of the liner underlying the disk rib.

There have thus been described several embodiments of a plastic closure, a method of making such a closure, and a closure and container package, which fully satisfy all of the objects and aims previously set forth. All of the closures and packages possess superior sealing capability, particularly in high-temperature applications such as hot fill, asceptic fill, pasteurization and retort applications. The closures and packages also achieve superior barrier properties when barrier materials are included in the sealing liners of the closures. The invention has been described in conjunction with a number of aspects and embodiments, and a number of modifications and variations have been discussed. Other modifications and variations will readily suggest themselves to persons of ordinary skill in the art. The invention is intended to embrace all such modifications and variations as fall within the scope of the appended claims.

## Claims

1. A two-piece plastic closure (28) that includes:
a plastic closure shell including a base wall (30) and a peripheral skin (32) with internal means (34) for securing the closure over a container finish, **characterised by**
a plastic disk (46) loosely retained within said shell parallel to but separate from said base wall, and a resilient scaling liner (48) secured to said disk for scaling engagement with a container finish.

2. The closure set forth in claim 1 wherein said disk includes an annular ring (54) underlying said liner on a aide of said disk remote from said base wall, said ring being spaced from said skin for urging said liner against a radially inner edge of a container finish when said closure is secured to the container finish.

3. The closure set forth in claim 2 wherein said disk comprises a flat base from which said annular ring extends.

4. The closure set forth in claim 3 wherein said ring has an S-shaped radially outwardly facing surface, including a rounded convex portion (56) that extends from an axial edge of said ring and a rounded concave portion (58) that extends from said convex portion to a flat axially facing surface of said base.

5. The closure set forth in claim 4 wherein said disk base has a central portion (50) within said ring and a peripheral portion (52) outside of said ring, said central and peripheral portions being of identical thickness.

6. The closure set forth in claim 5 wherein said liner (48) is of uniform thickness over said central portion, said ring and said peripheral portion of said disk.

7. The closure set forth in claim 6 wherein said liner includes a barrier resin material to resist migration of gases, water vapor or flavorants through said liner.

8. The closure set forth in claim 5 wherein said disk further includes an axially extending bead (64) around a peripheral portion of said disk base to space said disk base from said base wall of said shell.

9. The closure set forth in claim 3 wherein said disk further includes an annular rib (78) around a radially outer edge of said disk base extending away from said base wall and underlying said liner for engaging said liner against a radially outer edge of a container finish when said closure is secured to the container finish.

10. The closure set forth in claim 9 wherein said annular rib has a radially inwardly directed surface (80), onto which a peripheral portion of said liner is molded, that extends axially and radially outwardly from said base of said disk.

11. The closure set forth in claim 10 wherein thickness of said liner on said radially inwardly directed surface of said rib is less than the thickness of said liner on said disk base and said ring.

12. The closure set forth in claim 10 wherein said closure shell has a bead (66) extending radially inwardly from said skin adjacent to but spaced from said base wall, and wherein said annular rib (78) has a concave radiaUy outwardly directed surface portion received over said head.

13. The closure set forth in any preceding claim wherein said closure shell includes a bead (66) extending radially inwardly from said skirt at a position spaced from said base wall, and wherein said disk and liner are loosely captured between said bead and said base wall.

14. The closure set forth in claim 13 wherein said closure shell further includes a tamper-indicating band (38) connected by frangible means to a lower edge of said skirt (32) for abument with a stop (42) on the container finish, spacing between said bead and said base wall being such that said band abuts the stop and fractures said frangible means before said bead lifts said disk and liner from sealing engagement with the container finish.

15. The closure set forth in any preceding claim wherein said liner includes a barrier material against migration of gases, water vapor or flavorants through said liner.

16. The closure set forth in any preceding claim wherein said liner is molded in situ onto said disk within said closure.

17. A closure and container package that includes;
a container including a body and a finish with an external thread, and
a plastic closure as set forth in any preceding claim.

18. A method of making a two-piece plastic closure as set forth in any preceding claim that includes:
(a) providing a plastic closure shell that includes a base wall (30) and a peripheral skirt (32) with internal means (34) for securing the closure to a container finish.
(b) placing a plastic disk (46) within said closure shell against said base wall, and
(c) compression molding a resilient plastic liner (48) in situ onto said disk for sealing engagement with a container finish.

## Patentansprüche

1. Zweiteiliger Kunststoffverschluss (28), umfassend:
eine Kunststoffverschlussschale mit einer Basiswandung (30) und einer peripheren Ringwand (32) mit inneren Mitteln (34) zum Befestigen des Verschlusses auf einem Behälterhals,
**gekennzeichnet durch**
eine Kunststoffscheibe (46), die lose in der Schale gehalten wird, und zwar parallel zu der Basiswandung, aber getrennt von dieser, und einen elastischen Dichtungsüberzug (48), der an der Scheibe befestigt ist, zur abdichtenden Anlage an einem Behälterhals.

2. Verschluss nach Anspruch 1, bei welchem die Scheibe einen kreisförmigen Ring (54) umfasst, der auf einer von der Basiswandung entfernten Seite der Scheibe unter dem Überzug liegt, wobei der Ring von der Ringwand beabstandet ist, um den Überzug gegen einen radialen Innenrand eines Behälterhalses zu drücken, wenn der Verschluss auf dem Behälterhals befestigt wird.

3. Verschluss nach Anspruch 2, bei welchem die Scheibe eine flache Basis umfasst, von welcher aus sich der kreisförmige Ring erstreckt.

4. Verschluss nach Anspruch 3, bei welchem der Ring eine S-förmige, radial nach außen gewandte Oberfläche aufweist, die einen abgerundeten konvexen Abschnitt (56) umfasst, der sich von einem axialen Rand des Rings aus erstreckt, sowie einen abgerundeten konkaven Abschnitt (58), der sich von dem konvexen Abschnitt aus zu einer ebenen, axial blickenden Oberfläche der Basis erstreckt.

5. Verschluss nach Anspruch 4, bei welchem die Scheibenbasis einen mittigen Abschnitt (50) innerhalb des Rings und einen peripheren Abschnitt (52) außerhalb des Rings aufweist, wobei der mittige Abschnitt und der periphere Abschnitt identische Dicken aufweisen.

6. Verschluss nach Anspruch 5, bei welchem der Überzug (48) über den mittigen Abschnitt, den Ring und den peripheren Abschnitt der Scheibe hin eine einheitliche Dicke aufweist.

7. Verschluss nach Anspruch 6, bei welchem der Überzug ein Barrierekunststoffmaterial umfasst, um einer Wanderung von Gasen, Wasserdampf oder Aromastoffen durch den Überzug hindurch einen Widerstand entgegenzusetzen.

8. Verschluss nach Anspruch 5, bei welchem die Scheibe ferner einen sich axial erstreckenden Wulst (64) um einen peripheren Abschnitt der Scheibenbasis herum aufweist, um die Scheibenbasis im Abstand von der Basiswandung der Schale zu halten.

9. Verschluss nach Anspruch 3, bei welchem die Scheibe ferner eine ringförmige Rippe (78) um einen radialen Außenrand der Scheibenbasis herum umfasst, die sich von der Basiswandung weg erstreckt und unter dem Überzug liegt, um den Überzug in Anlage an einen radialen Außenrand eines Behälterhalses zu bringen, wenn der Verschluss an dem Behälterhals befestigt wird.

10. Verschluss nach Anspruch 9, bei welchem die ringförmige Rippe eine radial nach innen gerichtete Oberfläche (80) aufweist, auf welche ein peripherer Abschnitt des Überzugs aufgeformt ist, der sich von der Basis der Scheibe aus axial und radial nach außen erstreckt.

11. Verschluss nach Anspruch 10, bei welchem die Dicke des Überzugs auf der radial nach innen gerichteten Oberfläche der Rippe geringer als die Dicke des Überzugs auf der Scheibenbasis und dem Ring ist.

12. Verschluss nach Anspruch 10, bei welchem die Verschlussschale einen Wulst (66) aufweist, der sich von der Ringwand aus radial nach innen erstreckt, benachbart, aber in Abstand zu der Basiswandung, und bei welchem die ringförmige Rippe (78) einen konkaven, radial nach außen gerichteten Oberflächenabschnitt aufweist, der über dem Wulst aufgenommen wird.

13. Verschluss nach einem der vorhergehenden Ansprüche, bei welchem die Verschlussschale einen Wulst (66) umfasst, der sich von der Ringwand aus an einer von der Basiswandung beabstandeten Stelle radial nach innen erstreckt, und bei welchem die Scheibe und der Überzug lose zwischen dem Wulst und der Basiswandung eingeschlossen sind.

14. Verschluss nach Anspruch 13, bei welchem die Verschlussschale ferner ein Originalitätsband (38) aufweist, das durch zerbrechliche Mittel mit einem unteren Rand der Ringwand (32) verbunden ist, und zwar zum Anstoßen an einem Anschlag (42) an dem Behälterhals, wobei der Abstand zwischen dem Wulst und der Basiswandung derart vorgesehen ist, dass das Band an dem Anschlag in Anlage kommt und die zerbrechlichen Mittel zerreißt, bevor der Wulst die Scheibe und den Überzug aus der abdichtenden Anlage an dem Behälterhals abhebt.

15. Verschluss nach einem der vorhergehenden Ansprüche, bei welchem der Überzug ein Barrierematerial gegen ein Durchwandern von Gasen, Wasserdampf oder Aromastoffen durch den Überzug umfasst.

16. Verschluss nach einem der vorhergehenden Ansprüche, bei welchem der Überzug in situ in dem Verschluss auf die Scheibe geformt wird.

17. Verpackung aus Verschluss und Behälter, welche umfasst:
einen Behälter, der einen Körper und einen Hals mit einem Außengewinde umfasst, und
einen Kunststoffverschluss gemäß einem der vorhergehenden Ansprüche.

18. Verfahren zur Herstellung eines zweiteiligen Kunststoffverschlusses nach einem der vorhergehenden Ansprüche, welches umfasst:
(a) Bereitstellen einer Kunststoffverschlussschale, die eine Basiswandung (30) und eine periphere Ringwand (32) mit internen Mitteln (34) zum Befestigen des Verschlusses an einem Behälterhals umfasst,
(b) Anordnen einer Kunststoffscheibe (46) in der Verschlussschale an der Basiswandung, und
(c) Formpressen eines elastischen Kunststoffüberzugs (48) in situ auf die Scheibe, zur abdichtenden Anlage an einem Behälterhals.

## Revendications

1. Elément de fermeture en matière plastique en deux parties (28) comprenant :
un corps d'élément de fermeture en matière plastique comprenant une paroi de base (30) et une jupe périphérique (32) comportant des moyens internes (34) pour fixer l'élément de fermeture à un goulot de récipient, **caractérisé par**
un disque en matière plastique (46) retenu de façon lâche à l'intérieur dudit corps parallèlement à ladite paroi de base mais espacé de celle-ci, et une doublure d'étanchéité élastique (48) fixée audit disque pour venir en contact d'étanchéité avec un goulot de récipient.

2. Elément de fermeture selon la revendication 1, dans lequel ledit disque comprend un anneau circulaire (54) s'étendant sous ladite doublure sur un côté dudit disque opposé à ladite paroi de base, ledit anneau étant espacé de ladite jupe pour pousser ladite doublure contre un bord radialement intérieur d'un goulot de récipient lorsque ledit élément de fermeture est fixé au goulot de récipient.

3. Elément de fermeture selon la revendication 2, dans lequel ledit disque comprend une base plate depuis laquelle s'étend ledit anneau circulaire.

4. Elément de fermeture selon la revendication 3, dans lequel ledit anneau a une surface en forme de S tournée radialement vers l'extérieur, comprenant une partie arrondie convexe (56) qui s'étend depuis un bord axial dudit anneau et une partie arrondie concave (58) qui s'étend depuis ladite partie convexe jusqu'à une surface plate, tournée axialement, de ladite base.

5. Elément de fermeture selon la revendication 4, dans lequel ladite base de disque comprend une partie centrale (50) à l'intérieur dudit anneau et une partie périphérique (52) à l'extérieur dudit anneau, lesdites parties centrale et périphérique ayant une épaisseur identique.

6. Elément de fermeture selon la revendication 5, dans lequel ladite doublure (48) a une épaisseur uniforme sur ladite partie centrale, ledit anneau et ladite partie périphérique dudit disque.

7. Elément de fermeture selon la revendication 6, dans lequel ladite doublure comprend un matériau formant barrière en résine pour résister à la migration de gaz, de vapeur d'eau ou d'aromatisants à travers ladite doublure.

8. Elément de fermeture selon la revendication 5, dans lequel ledit disque comprend en outre une moulure s'étendant axialement (64) autour d'une partie périphérique de ladite base de disque pour espacer ladite base de disque de ladite paroi de base dudit corps.

9. Elément de fermeture selon la revendication 3, dans lequel ledit disque comprend en outre une nervure annulaire (78) autour d'un bord radialement extérieur de ladite base de disque s'étendant en sens opposé à ladite paroi de base et s'étendant sous ladite doublure pour faire porter ladite doublure contre un bord radialement extérieur d'un goulot de récipient lorsque ledit élément de fermeture est fixé au goulot de récipient.

10. Elément de fermeture selon la revendication 9, dans lequel ladite nervure annulaire comprend une surface dirigée radialement vers l'intérieur (80), sur laquelle une partie périphérique de ladite doublure est moulée, qui s'étend axialement et radialement vers l'extérieur depuis ladite base dudit disque.

11. Elément de fermeture selon la revendication 10, dans lequel l'épaisseur de ladite doublure sur ladite surface dirigée radialement vers l'intérieur de ladite nervure est inférieure à l'épaisseur de ladite doublure sur ladite base de disque et ledit anneau.

12. Elément de fermeture selon la revendication 10, dans lequel ledit corps d'élément de fermeture comprend une moulure (66) s'étendant radialement vers l'intérieur depuis ladite jupe de façon adjacente à ladite paroi de base mais en étant espacée de celle-ci, et dans lequel ladite nervure annulaire (78) comprend une partie de surface concave dirigée radialement vers l'extérieur et reçue sur ladite moulure.

13. Elément de fermeture selon l'une quelconque des précédentes revendications, dans lequel ledit corps d'élément de fermeture comprend une moulure (66) s'étendant radialement vers l'intérieur depuis ladite jupe en une position espacée de ladite paroi de base, et dans lequel ledit disque et ladite doublure sont retenus de façon lâche entre ladite moulure et ladite paroi de base.

14. Elément de fermeture selon la revendication 13, dans lequel ledit corps d'élément de fermeture comprend en outre une bande de garantie de non violation (38) reliée par des moyens frangibles à un bord inférieur de ladite jupe (32) pour porter contre une butée (42) sur le goulot de récipient, l'espacement entre ladite moulure et ladite paroi de base étant tel que ladite bande porte contre la butée et rompt lesdits moyens frangibles avant que ladite moulure ne soulève ledit disque et ladite doublure en les mettant hors de contact d'étanchéité avec le goulot de récipient.

15. Elément de fermeture selon l'une quelconque des précédentes revendications, dans lequel ladite doublure comprend un matériau formant barrière contre la migration de gaz, de vapeur d'eau ou d'aromatisants à travers ladite doublure.

16. Elément de fermeture selon l'une quelconque des précédentes revendications, dans lequel ladite doublure est moulée in situ sur ledit disque à l'intérieur dudit élément de fermeture.

17. Emballage à élément de fermeture et récipient, comprenant :
un récipient comprenant un corps et un goulot cylindrique ayant un filet externe, et
un élément de fermeture en matière plastique tel qu'indiqué dans l'une quelconque des précédentes revendications.

18. Procédé de fabrication d'un élément de fermeture en matière plastique en deux parties tel qu'indiqué dans l'une quelconque des précédentes revendications, comprenant les étapes consistant à :
(a) réaliser un corps d'élément de fermeture en matière plastique qui comprend une paroi de base (30) et une jupe périphérique (32) ayant des moyens internes (34) pour fixer l'élément de fermeture à un goulot de récipient,
(b) placer un disque en matière plastique (46) à l'intérieur dudit corps d'élément de fermeture contre ladite paroi de base, et
(c) mouler par compression une doublure élastique en matière plastique (48) in situ sur ledit disque pour venir en contact d'étanchéité avec un goulot de récipient.
